# EUROPÄISCHE PATENTSCHRIFT

(11) **EP 0 341 280 B1**
(45) Veröffentlichungstag und Bekanntmachung des Hinweises auf die Patenterteilung: **20.10.1993**
(21) Anmeldenummer: 88909722.6
(22) Anmeldetag: 17.11.1988
(51) Int. Cl.: B01D 53/00, B01D 53/02, B01D 53/22, B01D 11/02, C02F 3/10, C02F 3/34

(54) **VERFAHREN ZUR ENTFERNUNG VON SCHADSTOFFEN AUS WASSER ODER LUFT**
PROCESS FOR REMOVING HAZARDOUS SUBSTANCES FROM WATER OR AIR
PROCEDE D'ELIMINATION DE SUBSTANCES NOCIVES CONTENUES DANS DE L'EAU OU DE L'AIR

(30) Priorität: 16.11.1987 DE 3738880
(43) Veröffentlichungstag der Anmeldung: 15.11.1989
(73) Patentinhaber: Chmiel, Horst Prof. Dr.-Ing., D-71229 Leonberg (DE)
(72) Erfinder: Chmiel, Horst Prof. Dr.-Ing., D-71229 Leonberg (DE)
(74) Vertreter: Münich, Wilhelm, Dr.
(86) Internationale Anmeldenummer: DE8800717
(87) Internationale Veröffentlichungsnummer: WO8904712

(56) Entgegenhaltungen:
- DE-A- 2 716 797

## Beschreibung

### Technisches Gebiet

Die Erfindung bezieht sich auf ein Verfahren zur Entfernung von Schadstoffen aus einem Fluid, insbesondere aus Wasser und Luft gemäß dem Oberbegriff des Anspruchs 1.

Allein in der Bundesrepublik Deutschland gehen jährlich etwa 2 Mio. Tonnen organische Lösemittel bei ihrer industriellen Verwendung "verloren". Hinzu kommt eine nicht abzuschätzende Menge an bereits im Boden und Wasser befindlichen Lösemitteln - die sogenannten Altlasten. Dieser ungeheuren Umweltbelastung muß dringend Einhalt geboten werden.

### Stand der Technik

Die wichtigsten derzeit eingesetzten Verfahren, dieses Problem zu lösen, sind
- direkte und indirekte Kondensation
- Absorption mittels Flüssigkeiten (kalte Wäsche)
- Adsorption an Feststoffen (z.B. Aktivkohle)
- Abtrennung über Membranen
- Verbrennung.

Die Verfahren unterscheiden sich zum einen stark in ihren Betriebs- und Anlagekosten. Beispielsweise in Abhängigkeit von der Schadstoffkonzentration ist einmal das eine oder das andere Verfahren im Vorteil. Wegen nicht zu eliminierender Restschadstoffe, insbesondere aber aus Kostengründen, sind alle genannten Verfahren unbefriedigend.

Oft sind die Oberflächen, auf denen die Mikroorganismen wachsen, Adsorbentien, z.B. Aktivkohle oder die in der DE-A-27 16 797 genannten Polymere mit Mikroporen, in denen die Schadstoffe an der Oberfläche sorbiert werden. Die Konzentration der durch die Mikroorganismen abzubauenden Schadstoffe im Fluid schwanken jedoch häufig stark, so daß es unter Umständen zum "Durchschlag" von Schadstoffen kommen kann.

Für einige Lösemittel wie z.B. Methylenchlorid wurden inzwischen Bakterienstämme gefunden, die das Lösemittel biologisch abbauen. Dazu läßt man die Bakterien in der Regel an festen Oberflächen aufwachsen und führt daran das mit dem Lösemittel beladene Fluid (beispielsweise Luft oder Wasser) vorbei.

Die Mikroorganismen können sich jedoch den bei Adsorptionsverfahren auftretenden Konzentrationsschwankungen nicht schnell genug anpassen, so daß es zum Durchbruch an Schadstoffen kommt.

Besonders schwierig wird es, wenn die Schadstoffkonzentration für einen biologischen Abbau zu niedrig ist, aber dennoch über dem zugelassenen Richtwert liegt. So darf beispielsweise Wasser mit einem Gehalt von 0,25 mg/l leichtflüchtigen chlorierten Kohlenwasserstoffen (LCKW) für Trinkwasserzwecke nicht mehr verwendet werden. In zunehmendem Maße müssen Bodenverunreinigungen ("Alt-lasten") wegen der befürchteten Trinkwassergefährdung umgehend saniert werden. Eine häufig benutzte Methode ist die sog. "Bodenluftabsaugung". Dabei wird ein Loch in den verunreinigten Boden gebohrt. Ein Lüfter erzeugt darin einen Unterdruck. Der mit den flüchtigen Lösemitteln beladene Luftstrom wird anschließend durch eine Adsorbersäule (meist Aktivkohle oder Harze) geblasen. Ist die Säule beladen, muß sie regeneriert werden. Anlage- und Betriebskosten sind erheblich. Auch andere Industrien benutzen in Ermangelung besserer Verfahren die Adsorbersäule zur Reinigung Schadstoff-beladener Abluft.

### Darstellung der Erfindung

Der Erfindung liegt die Aufgabe zugrunde, ein Verfahren bzw. eine Vorrichtung zur Entfernung von Schadstoffen aus einem Fluid, insbesondere aus Wasser und Luft anzugeben, mit dem große Schadstoffmengen auch bei momentan hohem Schadstoffanfall sicher entfernt werden können, ohne daß es zu einem "Durchschlag" an Schadstoffen kommt.

Eine erfindungsgemäße Lösung dieser Aufgabe ist mit ihren Weiterbildungen in den Patentansprüchen gekennzeichnet.

Ausgangspunkt der Erfindung ist die Erkenntnis, daß sich für jede Klasse von Lösemitteln Polymere bzw. Polymermischungen angeben lassen, in denen sich die jeweiligen Lösemittel besonders gut lösen (hoher Verteilungskoeffizient). Dabei können bei geeigneter Auswahl der Polymeren (hohe Löslichkeit des Lösemittels bzw. große Anreicherungsfaktoren) Verteilungskoeffizienten bis zu 1000 erreicht werden.

Hat das Polymer seine Sättigungskonzentration erreicht, muß es regeneriert werden, d.h. das Lösemittel wird dem Polymer wieder entzogen. Hier bieten sich alternativ oder kumulativ zwei Lösungsmöglichkeiten als besonders bevorzugt an:
Zum einen kann eine zyklische Extraktion mittels kritischem bzw. überkritischem CO₂ (flüssiges CO₂) erfolgen:
Hierbei wird zur Reinigung die Erkenntnis ausgenutzt, daß CO₂ in kritischem bzw. überkritischem Zustand sehr gut insbesondere leichtflüchtige chlorierta Kohlenwasserstoffe LCKW löst. Wird es anschließend entspannt, gibt es das Lösemittel wieder in flüssiger Form ab.

Weiter kann eine kontinuierliche Entfernung durch Mikroorganismen erfolgen:
Die Mikroorganismen benutzen den Schadstoff als Kohlenstoff- und Energiequelle und bauen ihn dabei biologisch ab.

Ferner ist erfindungsgemäß erkannt worden, daß aus folgendem Grunde die Vorrichtung zur Durchführung des erfindungsgemäßen Verfahren verschiedene besondere Merkmale aufweisen muß:
Da das dampfförmige Lösemittel diffusiv durch das Polymer wandert, sollte dessen Dicke nicht zu groß sein. Hier bieten sich zwei Wege an, ein großes Verhältnis Oberfläche/Volumen zu erreichen:
1. Kugelförmige Partikeln
2. Dünnwandige Röhrchen; sogenannte Hohlfasern.

Deshalb ist gemäß Anspruch 2 die erfindungsgemäße Vorrichtung zur Realisierung der vorstehend unter 1. aufgeführten Möglichkeit derart aufgebaut, daß die Mikroorganismen auf partikelförmigen Trägern oder einem Fluid aufwachsen, die von einem Polymerfilm bzw. einer Polymermembran umgeben sind, der den Schadstoff besonders gut löst.

Zur Realisierung der unter 2. aufgeführten Möglichkeit ist gemäß Anspruch 3 der Polymerfilm als Rohr bzw. Hohlfaser ausgebildet, auf dessen dem Fluidstrom abgewandter Seite Mikroorganismen wachsen, die den Schadstoff biologisch abbauen.

Um zu verhindern, daß plötzliche Spitzen in der Lösemittelkonzentration zu einem Durchbruch führen, wird in der im Anspruch 4 gekennzeichneten besonders vorteilhaften Ausführung der Vorrichtung der Luftstrom nach Passieren des mit Mikroorganismen beladenen Festbettes noch durch eine Adsorbersäule oder eine Molekularsieb-Säule geführt. Diese nimmt dann die verbleibenden Schadstoffe auf.

Bei Verwendung von partikelförmigen Trägern für die Mikroorganismen ist es selbstverständlich möglich, die Träger in einem Stützgewebe zu fixieren, wie dies für Chromatografie- bzw. Adsorber-Material in der deutschen Patentanmeldung P 37 38 691.3 des selben Anmelders beschrieben ist.

Hierzu sind die Partikel in einem Stützgewebe fixiert, das beiderseits von Porenmembranen bzw. feinmaschigem Gewebe verschlossen ist. Hierdurch wird zum einen erreicht, daß die feste Phase weder durch ihr Eigengewicht noch durch von außen angelegte Drücke beschädigt wird, zum anderen ist eine leichte Handhabbarkeit gewährleistet (Anspruch 5). In diesem Falle ist es auch möglich, anstelle der Entfernung des Schadstoffs die kugelförmigen Partikel aus dem "Wickel" zu entnehmen und zu entsorgen sowie den Wickel mit neuen Partikeln zu beladen.

Ferner ist es selbstverständlich möglich, das sich dann ergebende flächige System gemäß Anspruch 6 in mehreren Schichten aufgewickelt, so daß die Gesamtabmessungen des Systems praktikabel sind.

Auch ist es gemäß Anspruch 7 möglich, durch Abstandhalter, die wenigstens ein zwischen den Schichten vorgesehenes weiteres Stützgewebe bildet, eine über die ganze Fläche gleichmäßige Flüssigkeitszu- und abfuhr zu erreichen.

Dabei ist es besonders bevorzugt, wenn - wie im Anspruch 10 gekennzeichnet - zwei Stützgewebe als Abstandshalter vorgesehen sind.

### Kurze Beschreibung der Zeichnung

Die Erfindung wird nachstehend anhand von Ausführungsbeispielen unter Bezugnahme auf die Zeichnung näher beschrieben, in der zeigen:
- Fig. 1a: einen Querschnitt durch ein erstes Ausführungsbeispiel einer erfindungsgemäßen Vorrichtung,
- Fig. 1b: den bei diesem Ausführungsbeispiel verwendeten Träger für Mikroorganismen,
- Fig. 2a: einen Querschnitt durch ein zweites Ausführungsbeispiel einer erfindungsgemäßen Vorrichtung, und
- Fig. 2b: den bei diesem Ausführungsbeispiel verwendeten Träger für Mikroorganismen,

### Beschreibung von Ausführungsbeispielen

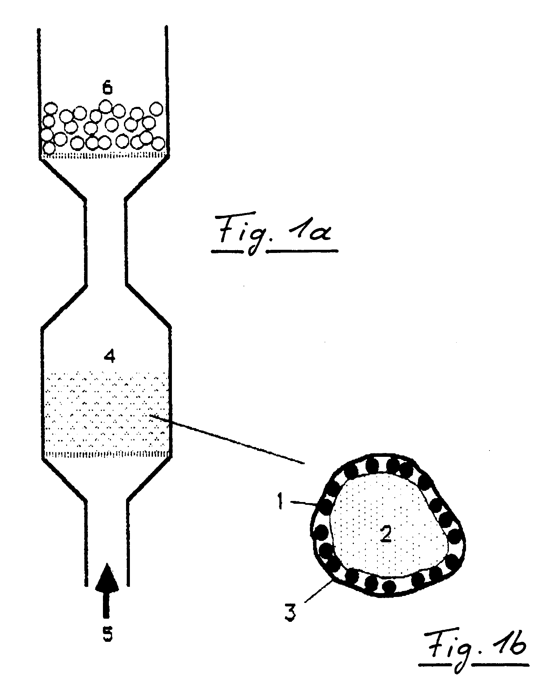

Fig. 1 zeigt ein Ausführungsbeispiel mit partikelförmigen Trägern für Mikroorganismen. Die Mikroorganismen (1), die den Schadstoff als alleinige Kohlenstoff- und Energiequelle nutzen, wachsen auf Partikeln (2) (z.B. Aktivkohle), die vom betreffenden Polymer als dünner Film oder Membran (3) umhüllt sind (Fig. 1b).

Die Partikeln werden als Festbett (4) von dem mit Schadstoff beladenen Luftstrom (5) angeströmt. Die Mikroorganismen - im Beispiel des Schadstoffes Methylenchlorid kann es sich beispielsweise um einen Methylenchlorid-abbauenden Hyphomcrobium-Stamm handeln - entnehmen dem Luftstrom den Schadstoff und den benötigten Sauerstoff. Auf diese Weise ist der Luftstrom auf das zulässige Minimum an Lösemittel reduziert. Das Festbett kann dabei in der in der Anmeldung P 37 38 691.3 des selben Anmelders beschriebenen Weise ausgebildet sein.

Um zu verhindern, daß plötzliche Spitzen in der Lösemittelkonzentration zu einem Durchbruch führen, wird in einer besonders vorteilhaften Ausführung der Vorrichtung der Luftstrom nach Passieren des mit Mikroorganismen beladenen Festbettes noch durch eine Adsorbersäule oder eine Molekularsieb-Säule (6) geführt. Diese nimmt dann die verbleibenden Schadstoffe auf (Fig. 1a).

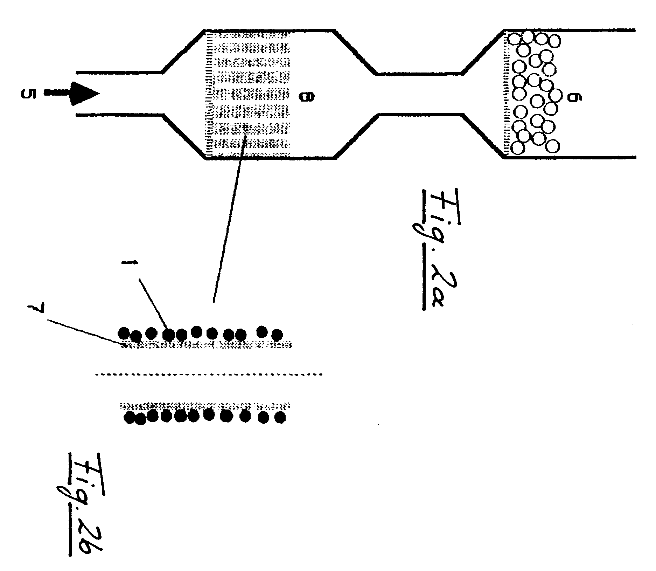

Fig. 2 zeigt ein weiteres Ausführungsbeispiel der Erfindung, bei dem die Mikroorganismen (1) nicht auf partikelförmigen Trägern, sondern auf schlauchförmigen Elementen aufwachsen. Hierzu ist das Polymer als dünner Schlauch bzw. Hohlfaser (7) ausgebildet (Fig. 2b). Auf der dem Luftstrom abgewandten Seite wachsen die Schadstoff-abbauenden Mikroorganismen (1).

Für die Beseitigung der Restschadstoffe gelten die Ausführungen zu Fig. 1: der Luftstrom strömt, nachdem er das Rohr-bzw. Hohlfaserbündel (8), das aus den in Fig. 2b dargestellten Elementen besteht, passiert hat, durch die Adsorber- bzw. Molekularsieb-Säule (6) (Fig. 2a).

### Gewerbliche Anwendbarkeit

Das erfindungsgemäße Verfahren und die erfindungsgemäße Vorrichtung kann in der Umwelttechnologie zu den verschiedensten Reinigungsvorgängen, beispielsweise zur Entfernung von Lösemitteln, die als Schadstoffe ins Grundwasser eingedrungen sind, eingesetzt werden.

Dabei richtet sich die Auswahl der Polymere und der Mikroorganismen nach dem aufzuarbeitenden bzw. reinigenden Fluid. Ein Beispiel für bei dem Schadstoff Methylenchlorid, der beispielsweise bei Reinigungsvorgängen in das Grundwasser oder in die Raumluft geraten kann, verwendbare Mikroorganismen sind Methylenchlorid-abbauende Hyphomcrobium-Stämme. Die Auswahl entsprechender Mikroorganismen und Polymere für andere Schadstoffe kann ein auf dem einschlägigen Gebiet tätiger Fachmann jederzeit aufgrund der vorstehenden Beschreibung treffen.

## Patentansprüche

1. Verfahren zur Entfernung von Schadstoffen aus einem Fluid, insbesondere aus Wasser oder Luft,
bei dem das mit dem oder den Schadstoffen beladene Fluid an einem Polymer vorbeiströmt, das eine hohe Löslichkeit bzw. einen großen Verteilungskoeffizienten, insbesondere bis zu 1000, für den Schadstoff aufweist, und der Schadstoff in dem Polymer gelöst wird, und
bei dem der Schadstoff aus dem Polymer zyklisch mit kritischem bzw. überkritischem CO₂ und/oder kontinuierlich durch Mikroorganismen entfernt wird, die den Schadstoff biologisch abbauen.

2. Vorrichtung zur Durchführung des Verfahrens nach Anspruch 1, mit einem Polymer, an dem das mit Schadstoff(en) beladene Fluid vorbeiströmt,
dadurch **gekennzeichnet**, daß die Mikroorganismen auf partikelförmigen Trägern oder einem Fluid aufwachsen, die von dem als Polymerfilm bzw. einer Polymermembran ausgebildeten Polymer umgeben sind, in dem bzw. der Schadstoff gelöst wird.

3. Vorrichtung zur Durchführung des Verfahrens nach Anspruch 1, mit einem Polymer, an dem das mit Schadstoff(en) beladene Fluid vorbeiströmt,
dadurch **gekennzeichnet**, daß das Polymer als Rohr bzw. als Hohlfaser ausgebildet ist, auf dessen dem Fluidstrom abgewandter Seite Mikroorganismen wachsen, die den Schadstoff biologisch abbauen.

4. Vorrichtung nach Anspruch 2 oder 3,
dadurch **gekennzeichnet**, daß der mit Mikroorganismen bewachsenen Säule bzw. dem mit Mikroorganismen bewachsenen Hohlfaserbündel eine Adsorbersäule in Reihe nachgeschaltet ist.

5. Vorrichtung nach Anspruch 2 oder 4,
dadurch **gekennzeichnet**, daß die partikelförmigen Träger in einem Stützgewebe fixiert sind, das beiderseits von Porenmembranen bzw. feinmaschigem Gewebe verschlossen ist.

6. Vorrichtung nach Anspruch 5,
dadurch **gekennzeichnet**, daß das flächige System in mehreren Schichten aufgewickelt ist.

7. Vorrichtung nach Anspruch 6,
dadurch **gekennzeichnet**, daß zwischen den Schichten wenigstens ein weiteres Stützgewebe als Abstandshalter vorgesehen ist, das für eine über die ganze Fläche gleichmäßige Flüssigkeitszu- und abfuhr sorgt.

8. Vorrichtung nach Anspruch 7,
dadurch **gekennzeichnet**, daß zwei Stützgewebe als Abstandshalter vorgesehen sind.

## Claims

1. Process for removing hazardous substances from a fluid, particularly water or air,
wherein said fluid loaded with said hazardous substance or substances flows by a polymer having a high solubility or partition coefficient, respectively, in particular up to 1000, of said hazardous substance, and wherein said hazardous substance is dissolved in said polymer,
and wherein said hazardous substance is cyclically removed from said polymer with critical or supercritical CO₂, respectively, and/or continuously by microorganisms which decompose said hazardous substance.

2. System for carrying through the process according to Claim 1, comprising a polymer which said fluid loaded with said hazardous substance(s) flows by,
**characterized** in that said microorganisms grow on particle-shaped carriers or a fluid, which are surrounded by said polymer which is formed by a polymer film or a polymer membrane and in which said hazardous substance is dissolved.

3. System for carrying through the process according to Claim 1, comprising a polymer which said fluid loaded with said hazardous substance(s) flows by,
**characterized** in that said polymer is shaped in the form of a tube or a hollow fibre, respectively, having one side turned away from said fluid flow, on which microorganisms grow which decompose said hazardous substance biologically.

4. System according to Claim 2 or 3,
**characterized** in that an adsorber column is connected in series downstream of said column on which said microorganisms grow or said bundle of hollow fibres which said microorganisms are grown on.

5. System according to Claim 2 or 4,
**characterized** in that said particle-shaped carriers are immobilized in a supporting tissue which is used on both sides by porous membranes or a micromesh tissue.

6. System according to Claim 5, **characterized** in that said said surface system is wound in several layers.

7. System according to Claim 6, **characterized** in that at least one additional supporting tissue is provided as spacer between said layers, which ensures a uniform liquid supply and discharge over the entire area.

8. System according to Claim 7,
**characterized** in that two supporting tissues are proved as spacers.

## Revendications

1. Procédé d'élimination de substances nocives contenues dans un fluide, en particulier dans de l'eau ou de l'air,
dans lequel les fluide chargé par ladite substance nocive ou lesdites substances nocives s'écoule devant un polymère à haute solubilité ou respectivement un haut coefficient de distribution, en particulier jusqu'à 1000, de ladite substance nocive, et dans lequel ladite substance nocive est dissoute dans ledit polymère,
et dans lequel ladite substance nocive est éliminée en cycles dudit polymère moyennant CO₂ critique ou respectivement surcritique, et/ou en continu moyennant des micro-organismes qui dégradent ladite substance nocive.

2. Système pour réaliser le procédé son la revendication 1, comprenant un polymère devant lequel s'écoule ledit fluide chargé par ladite ou lesdites substance(s) nocive(s),
**caractérisé** en ce que lesdits micro-organismes croissent sur des substrats particulaires ou un fluide, qui sont ceints par ledit polymère configuré sous forme d'un film polymère ou respectivement d'une membrane polymère dans lequel ou respectivement laquelle ladite substance nocive est dissoute.

3. Système pour réaliser le procédé son la revendication 1, comprenant un polymère devant lequel s'écoule ledit fluide chargé par ladite ou lesdites substance(s) nocive(s),
**caractérisé** en ce que ledit polymère est configuré sous forme d'un tube ou respectivement d'une fibre creuse qui présente un côté opposé audit courant du fluide, sur lequel croissent des micro-organismes qui dégradent ladite substance nocive biologiquement.

4. Système selon la revendication 2 ou 3,
**caractérisé** en ce qu'une colonne d'adsorption est relée en série en aval de ladite colonne sur laquelle croissent lesdits micro-organismes, ou du groupe de fibres creuses sur lesquelles croissent lesdits micro-organismes.

5. Système selon la revendication 2 ou 4,
**caractérisé** en ce que ledit substrat particulaire est immobilisé dans un tissu support qui est fermé sur les deux faces par des membranes poreuses ou par un tissu à mailles fines.

6. Système selon la revendication 5,
**caractérisé** en ce que les système de surface est enroulé en plusieurs couches.

7. Système selon la revendication 6, **caractérisé** en ce qu'au moins un tissu support additionnel est
prévu comme entretoise entre lesdites couches, qui assure une alimentation homogène en liquide ainsi qu'un décharge homogène du liquide par toute la surface.

8. Système selon la revendication 7,
**caractérisé** en ce que deux tissus supports sont disposés comme entretoises.
